# EUROPEAN PATENT SPECIFICATION

(11) **EP 3 831 502 B1**
(45) Date of publication and mention of the grant of the patent: **21.09.2022**
(21) Application number: 20209758.0
(22) Date of filing: 25.11.2020
(51) Int. Cl.: B09B 3/00, B09B 5/00, B29B 17/02, C03C 25/70, C10B 47/40, C10B 53/07, C10B 57/02, C10B 57/16, F27B 9/00, F27B 9/02, F27B 9/04, B29B 17/04

(54) **INSTALLATION AND METHOD FOR RECOVERING CARBON OR GLASS FIBRES FROM COMPOSITE MATERIALS**
ANLAGE UND VERFAHREN ZUR RÜCKGEWINNUNG VON KOHLENSTOFF- ODER GLASFASERN AUS VERBUNDWERKSTOFFEN
INSTALLATION ET PROCÉDÉ DE RÉCUPÉRATION DE FIBRES DE CARBONE OU DE VERRE À PARTIR DE MATÉRIAUX COMPOSITES

(30) Priority: 04.12.2019 IT 201900022995
(43) Date of publication of application: 09.06.2021
(73) Proprietor: Societa' per Azioni Curti - Costruzioni Meccaniche, 48014 Castel Bolognese (RA) (IT)
(72) Inventor: CAVAZZONI, Massimo, 42019 Ventoso (RE) (IT); GIORGINI, Loris, 40065 Pianoro (BO) (IT); LEONARDI, Chiara, 48018 Faenza (RA) (IT); TOSI, Cristian, 41016 Castelfranco Emilia (MO) (IT); ZATTINI, Giorgio, 48123 Savarna (RA) (IT)
(74) Representative: Crugnola, Pietro

(56) References cited:
- WO-A1-03/089212
- WO-A1-2009/090264
- DE-A1-102007 026 748
- US-A1- 2006 246 391
- US-A1- 2016 060 535
- US-A1- 2019 248 045

## Description

The invention relates to a plant and a method for recovering carbon or glass fibres from composite materials in which said fibres are enclosed in a polymer matrix.

The aforesaid composite materials can come from waste produced in different stages of industrial processing and/or from products that have reached the end of their life cycle.

It is known recovering the carbon or glass fibres by performing a combined pyrolysis and gasification process in which the material to be treated is first subjected to pyrolysis in an atmosphere that is substantially devoid of oxygen to decompose the polymer matrix that includes the carbon or glass fibres and is subsequently subjected to combustion in an atmosphere containing oxygen to gassify the carbon residues of the polymer matrix, which remain at the end of pyrolysis.

Performing said combined process in a tunnel kiln is further known in which, in a first zone of the kiln, pyrolysis of the material to be treated is performed and, in a second zone of the kiln the gasification process for the carbon residues is performed.

Tunnel kilns for performing the aforesaid combined process are disclosed, for example, in US7922871 B2, JP2008285601 A, US2016/0039118 A1, and US20190248045 A1.

During the pyrolysis process, fumes are generated that contain combustible substances, whereas the fumes generated by the gasification process contain significant quantities of oxygen.

It is accordingly important to prevent the fumes generated in the pyrolysis process and the fumes generated in the gasification process getting mixed together inside the kiln because this could cause undesired combustions inside the kiln.

In US7922871 B2, JP2008285601 A, and US2016/0039118 A1, the pyrolysis and gasification zones are not separate from one another, so there is a risk that the atmospheres of the two zones may mix and cause undesired combustions inside the kiln.

In US20190248045 A1, the pyrolysis and gasification zones are physically separated by hermetically sealed doors. This ensures that the atmospheres of the two zones cannot get mixed together, but makes the kiln very complicated and costly to make.

One object of the present invention is to provide a plant and a method for recovering glass or carbon fibres from waste of composite materials containing glass or carbon fibres enclosed in a polymer matrix in which it is possible to obtain simply and cheaply a separation between the pyrolysis and gasification zones without resorting to costly and complex physical separating means between the two zones.

Another object of the present invention is to provide a plant in which it is possible to check with precision the conditions in which the pyrolysis process and the gasification process occur so as to optimize the results thereof so as to obtain fibres with a substantially constant diameter and which have not undergone degradation processes.

The objects of the invention are achieved with a plant for treating composite materials containing carbon or glass fibres according to claim 1 and with a method for treating composite materials containing carbon or glass fibres according to claim 10.

Owing to the invention, it is possible to recover carbon or glass fibres from composite material waste containing said fibres incorporated into a polymer matrix in a simple and effective manner, eliminating completely the polymer matrix that includes the aforesaid fibres, so as to obtain fibres with a substantially constant diameter, that have not undergone degradation processes. The plant according to the invention is further structured so as to prevent the atmospheres of the pyrolysis zone and of the gasification zone being able to mix without it being necessary to resort to physical separating means between the two zones.

Further features and advantages of the present invention will be clear from the following description of a non-limiting embodiment of a plant for treating composite materials containing carbon or glass fibres in a polymer matrix, with reference to the attached drawings, in which:

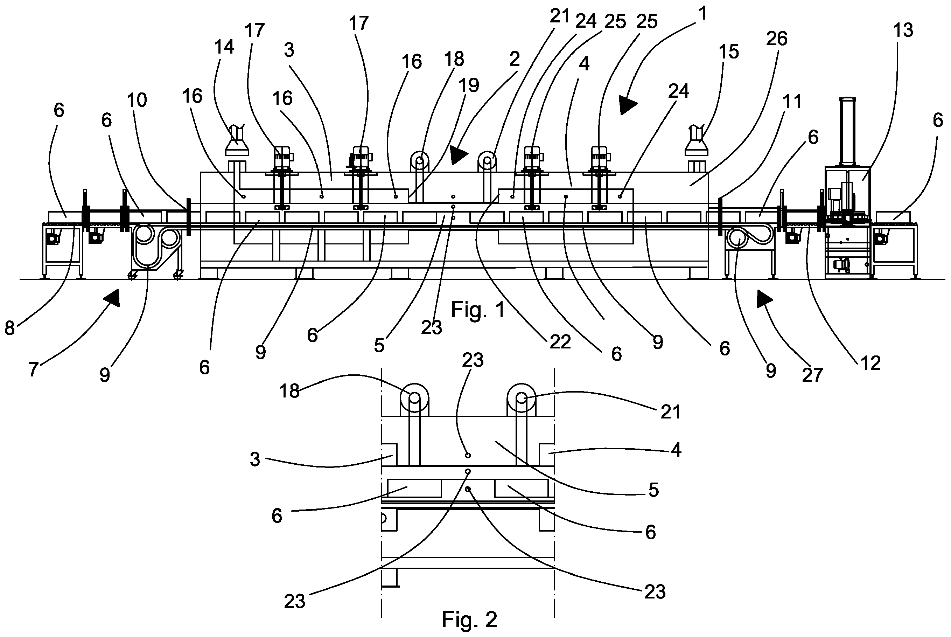

Figure 1 is a longitudinal section of a plant for treating composite materials according to the invention;
Figure 2 is an enlarged detail of Figure 1;
Figure 3 is a top view of the plant of Figure 1.

With reference to the figures, a plant 1 for treating composite materials according to the invention to recover carbon or glass fibres contained in said materials comprises a tunnel kiln 2 inside which are recognizable a pyrolysis zone 3, in which a pyrolysis process of the material to be treated is performed, a gasification zone 4, in which gasification occurs of carbon residues found in the carbon or glass fibres at the end of the pyrolysis process, and an intermediate separating zone 5 placed between the pyrolysis zone and the gasification zone, the function of which is to prevent the atmospheres of the pyrolysis zone and of the gasification zone being able to mix together .

The material to be treated is loaded into perforated or mesh containers 6, for example basket-shaped containers, which are introduced into the tunnel kiln 2 and advanced inside the tunnel kiln 2, as will be disclosed in greater detail below.

The material to be treated, before being loaded into the containers 6, can be subject to shattering, to reduce the dimensions thereof, where necessary, to make loading in the containers 6 possible that exploits in an optimum manner the capacity of the containers.

The containers are conveyed to an inlet zone 7 of the kiln 2 by a first conveying device 8, for example a roller conveyor. After reaching the inlet zone 7, the containers 6 are hooked by a second conveying device 9, for example a chain conveyor, provided with hooking elements, which are not visible in the figures, by which the second conveying device 9 hooks the containers 6 and conveys the containers to the tunnel kiln 2 through an inlet door 10.

The containers 6, after passing through the inlet door 10, are conveyed by the second conveying device 9 through the pyrolysis zone 3.

At the end of the pyrolysis treatment, the containers 6 are conveyed by the second conveying device 9 to the gasification zone 4, passing through the separating zone 5.

The containers 6 can be advanced continuously, at a substantially constant speed, through the pyrolysis zone 3 and through the gasification zone 4. Alternatively, the containers 6 can be advanced in an indexed manner to reduce the transients linked to the entry of the containers into the kiln and the exit of the containers from the kiln. In this case, the indexed advance is chosen on the basis of the process values (temperature, pressure, and flows of air, vapour, fumes and nitrogen) that indicate the state of completion of the process and have to remain within set limits. To this end, it is also possible to ensure that the containers remain in the pyrolysis zone 3 and in the gasification zone 4 for the entire duration of the respective treatment, without moving. This last option is preferable because it avoids the inlet door 10 and the outlet door 11 having to be opened frequently, with consequent entry at each opening of atmosphere from the external environment, which requires, at each opening of the inlet door 10 and of the outlet door 11, the atmosphere to be restored in the pyrolysis zone 3 and in the gasification zone 4 that is required for treating, with consequent slowing of the pyrolysis and gasification processes and an increase in treatment times.

Both the pyrolysis zone 3 and the gasification zone 4 are maintained at a slightly higher pressure than the external environment outside the kiln to limit the entry of air from the external environment when the inlet door 10 and the outlet door 11 are opened. Near the inlet door 10, in the pyrolysis zone 3, a first sucking device 14 is provided, for example a first suction hood.

Near the outlet door 11, in the gasification zone, a second sucking device 15, for example a second suction hood, is provided.

The first suction hood 14 and the second suction hood 15 serve to minimize an escape to the exterior of the atmosphere of the pyrolysis zone 3 and of the gasification zone 4 when the inlet door 10 and the outlet door 11 are opened.

In the pyrolysis zone 3, the atmosphere is made inert by nitrogen, which is introduced by a plurality of first injecting devices 16 distributed along the pyrolysis zone 3. The atmosphere in the pyrolysis zone 3 is maintained homogeneous by a plurality of first stirring devices 17, which maintain constantly in movement the nitrogen and the gases produced by the pyrolysis process.

The pyrolysis zone 3 is heated by convection and radiation preferably by the fumes arising from the combustion of the gases and the vapours produced during pyrolysis and gasification, so as to obtain an operating temperature comprised between 450° C and 600° C, depending on the nature of the material to be treated.

Alternatively, the pyrolysis zone 3 can be heated by methane, LPG or diesel burners, or by using electrical resistances.

The dwell time of the material to be treated in the pyrolysis zone is comprised between about 20 minutes and about 40 minutes, depending on the operating conditions and on the material to be treated.

Upon exiting the pyrolysis zone 3, the containers 6, before entering the gasification zone 4, transit in the intermediate zone 5 that acts as a separating zone between the pyrolysis zone 3 and the gasification zone 4.

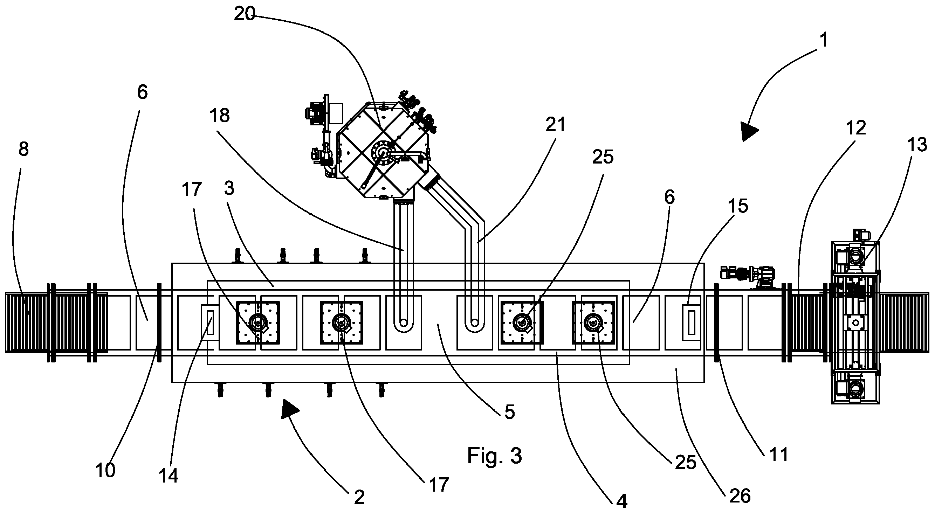

In said intermediate zone 5, a third sucking device 18 is provided that is arranged near the outlet 19 of the pyrolysis zone 3, which sucks the pyrolysis vapours produced in the pyrolysis zone 3 and sends the vapours to an afterburner device 20 (Figure 3) in which the combustible substances contained in the pyrolysis vapours are burnt to produce heat, which is usable to heat the pyrolysis zone 3 or the gasification zone 4.

In the intermediate zone 5, a fourth sucking device 21 is further provided that is arranged near the inlet 22 of the gasification zone, which sucks the fumes produced in the gasification zone 4 and sends the fumes to the afterburner device 20.

In the intermediate zone 5, a plurality of second injecting devices 23 is also provided, which are arranged between the third sucking device 18 and the fourth sucking device 21. The second injecting devices 23 are used to deliver to the intermediate zone 5 a flow of nitrogen by means of which it is prevented that the pyrolysis vapours produced in the pyrolysis zone 3 can come into contact with the fumes produced in the gasification zone 4, in order to prevent the combustible substances contained in the pyrolysis vapours being able to ignite in contact with the oxygen contained in the fumes coming from the gasification zone 4.

In the intermediate zone 5 and at the outlet 19 of the pyrolysis zone 3 and at the inlet 22 of the gasification zone 4 temperature sensors are provided, to detect possible temperature increases caused by the triggering of combustion phenomena and enable the flow of nitrogen to be regulated coming from the second injecting devices 23 to arrest said combustion phenomena.

Further, inside the intermediate zone 5 also pressure sensors are provided for the control of the direction of the flows of the pyrolysis vapours and of the gasification fumes.

Downstream of the intermediate zone 5, in the advancement direction of the containers 6, the gasification zone 4 is arranged, in which the material to be treated, which after the pyrolysis process mainly consists of carbon or glass fibres, is subjected to the action of oxygen so as to eliminate by gasification the carbon residues arising from the pyrolysis process and remaining on the surface of the carbon or glass fibres.

The gasification zone 4, like the pyrolysis zone 3 is heated by electrical resistances or by burners, or using the combustion fumes produced in the gasification zone.

The temperature is maintained in a range comprised between about 450 °C and 600 °C and the material to be treated is maintained in the gasification zone for a time comprised between about 10 minutes and about 20 minutes.

In order to ensure gasification of the carbon particles, air is injected into the gasification zone by a plurality of third injecting devices 24 distributed in the gasification zone 4. The quantity of air injected is comprised between about 0.8 and 1.4 kg of air for each kilogram of material to be treated, depending on the type of material and on the loading method.

The atmosphere in the gasification zone 4 is maintained homogeneous by a plurality of second stirring devices 25, which maintain constantly in movement the air and the fumes produced by the gasification process.

The fumes generated by the gasification process are sucked, as already said, by the fourth sucking device 21 and sent to the afterburner device 20 in which the fumes are treated thermally as required by current regulations.

The aforesaid fumes have a high energy content and can thus be used to heat the tunnel kiln 2, or to produce electrical or thermal energy.

At the end of the gasification process, the containers 6 are conveyed by the second conveying device 9 in a cooling zone 26 in which the temperature of the carbon or glass fibres obtained is taken to less than 350 °C, before taking the containers 6 outside the tunnel kiln 2 through the outlet door 11, in an outlet zone 27 of the kiln 2.

In said outlet zone 27, the containers 6 with the carbon or glass fibres are transferred from the second conveying device 9 to a third conveying device 12, for example a roller conveyor, which conveys the containers 6 through a washing and drying device 13, in which the carbon or glass fibres freed by the polymer matrix are subjected to a washing procedure to eliminate possible residues of carbon material and subsequently subjected to drying so as to obtain carbon or glass fibres that are devoid of impurities that could be harmful to a subsequent use of the fibres.

The carbon or glass fibres obtained can be reused as short fibres with lengths that are variable from 100 micron to 10 cm and also for making pieces of fabric.

## Claims

1. Plant (1) for recovering carbon or glass fibres from composite materials comprising said fibres in a polymer matrix, comprising a tunnel kiln (2) along which said materials are conveyed inside containers (6), wherein said tunnel kiln comprises a pyrolysis zone (3), in which said composite materials are subjected to a pyrolysis process in an atmosphere devoid of oxygen, and a gasification zone (3) in which said materials are subjected to a gasification process in the presence of oxygen, **characterized in that** it further comprises an intermediate separating zone (5) placed between the pyrolysis zone (3) and the gasification zone (4), wherein in said intermediate zone (5) a plurality of second injecting devices (23) is provided for delivering a flow of nitrogen to said intermediate zone (5), so as to prevent the atmosphere of the pyrolysis zone (3) coming into contact with the atmosphere of the gasification zone (4).

2. Plant (1) according to claim 1, further comprising a plurality of first injecting devices (16) arranged for delivering nitrogen to said pyrolysis zone (2) and/or a plurality of first stirring devices (17) arranged for homogenizing the atmosphere in said pyrolysis zone (3).

3. Plant (1) according to one of the preceding claims, wherein in said pyrolysis zone (2) a first sucking device (14) is arranged, near an inlet door (10) of the tunnel kiln (2) and/or a plurality of third injecting devices (24) are arranged for delivering air to said gasification zone (4).

4. Plant (1) according to one of the preceding claims, further comprising a plurality of second stirring devices (25) arranged for homogenizing the atmosphere in said gasification zone (4).

5. Plant (1) according to one of the preceding claims, wherein in said gasification zone (3), a second sucking device (16) is arranged, near an outlet door (11) of the tunnel kiln (2).

6. Plant (1) according to one of the preceding claims, wherein in said intermediate zone (5) a third sucking device (18) is provided arranged near an outlet (19) of said pyrolysis zone (3), and a fourth sucking device (21) is provided arranged near an inlet (22) of said gasification zone, wherein said third sucking device (18) and said fourth sucking device (21) supply an afterburner device (20).

7. Plant (1) according to one of the preceding claims, wherein, downstream of said gasification zone (4) in the conveying direction of the containers (6), a cooling zone (26) is provided for said carbon or glass fibres obtained from said composite materials at the end of said pyrolysis process and said gasification process.

8. Plant (1) according to one of the preceding claims, further comprising a washing and drying device (13) for said carbon or glass fibres.

9. Plant (1) according to claim 8, further comprising a first conveying device (8) for conveying said containers (6) to an inlet zone (7) of the tunnel kiln (2), a second conveying device (9) that receives the containers (6) from the first conveying device (8) and conveys the containers (6) inside the tunnel kiln (2), through the pyrolysis zones (3) and gasification zones (4) until the containers (6) are taken outside the tunnel kiln (2) in an outlet zone (27), and a third conveying device (12) that receives said containers (6) from second conveying device (9) and conveys the containers through said washing and drying device (13).

10. Method for recovering carbon or glass fibres from composite materials comprising said fibres in a polymer matrix, comprising the following steps:
- subjecting said composite materials to a pyrolysis treatment in a pyrolysis zone (3) of a tunnel kiln (2) in an atmosphere devoid of oxygen;
- subjecting said composite materials to a gasification treatment in a gasification zone (4) of said tunnel kiln (2), in the presence of oxygen,
**characterized in that** it further comprises injecting a flow of nitrogen to an intermediate separating zone (5) placed between said pyrolysis zone (3) and said gasification zone (4) to prevent the atmosphere of the pyrolysis zone and the atmosphere of the gasification zone coming into contact with one another.

11. Method according to claim 10, further comprising sucking in said intermediate zone (5) the vapour produced by the pyrolysis process near an outlet (19) of said pyrolysis zone (3) and sucking fumes produced by the gasification process near an inlet (22) of the gasification zone (4) and/or subjecting the carbon or glass fibres obtained at the end of pyrolysis and gasification processes to washing and drying.

12. Method according to claim 10, or 11, wherein said pyrolysis process is conducted at a temperature comprised between 450 °C and 600 °C for a time comprised between 20 minutes and 40 minutes.

13. Method according to one of claims 10 to 12, wherein said gasification process is conducted at a temperature comprised between 450 °C e 600 °C for a time comprised between 10 minutes and 20 minutes.

14. Method according to one of claims 10 to 13, wherein said carbon or glass fibres obtained at the end of said pyrolysis and gasification processes are cooled at a temperature below 350 °C before being extracted from said tunnel kiln (2).

15. Method according to one of the preceding claims, wherein in said gasification process is performed by delivering to said gasification zone (3) a quantity of air comprised between 0.8 kg and 1.4 kg for each kilogram of material to be treated.

## Patentansprüche

1. Anlage zur Wiedergewinnung von Kohlenstoff- oder Glasfasern aus Verbundmaterialien, welche die Fasern in einer Polymermatrix enthalten, mit einem Tunnelofen (2), entlang dessen die Materialien innerhalb von Behältern (6) gefördert werden, wobei der Tunnelofen eine Pyrolysezone (3) aufweist, in welcher die Verbundmaterialien einem Pyrolyseverfahren in einer Atmosphäre unter Ausschluss von Sauerstoff unterzogen werden, und mit einer Gasifizierungszone (3), in welcher die Materialien einem Gasifizierungsprozess in Anwesenheit von Sauerstoff unterzogen werden, **dadurch gekennzeichnet, dass** sie ferner eine Zwischen-Trennzone (5) aufweist, die zwischen der Pyrolysezone (3) und der Gasifizierungszone (4) angeordnet ist, wobei in der Zwischenzone (5) eine Mehrzahl von zweiten Einspritzeinrichtungen (23) vorgesehen ist, um einen Stickstoff-Fluss in die Zwischenzone (5) zu bringen, um so zu verhindern, dass die Atmosphäre der Pyrolysezone (3) in Kontakt mit der Atmosphäre der Gasifizierungszone (4) gelangt.

2. Anlage (1) nach Anspruch 1, welche ferner eine Mehrzahl von ersten Einspritzeinrichtungen (16) aufweist, die angeordnet sind, um Stickstoff in die Pyrolysezone (2) zu liefern und/oder eine Mehrzahl von ersten Rühreinrichtungen (17) aufweist, die angeordnet sind, um die Atmosphäre in der Pyrolysezone (3) zu homogenisieren.

3. Anlage (1) nach einem der vorhergehenden Ansprüche, bei welcher in der ersten Pyrolysezone (2) eine erste Saugeinrichtung (14) in der Nähe einer Einlasstür (10) des Tunnelofens (2) angeordnet ist und/oder eine Mehrzahl von dritten Einspritzeinrichtungen (24) vorgesehen sind, um Luft in die Gasifizierungszone (4) zu liefern.

4. Anlage (1) nach einem der vorhergehenden Ansprüche, welche ferner eine Mehrzahl von zweiten Rühreinrichtungen (25) aufweist, die angeordnet sind, um die Atmosphäre in der Gasifizierungszone (4) zu homogenisieren.

5. Anlage (1) nach einem der vorhergehenden Ansprüche, bei welcher in der Gasifizierungszone (3) eine zweite Saugeinrichtung (16) in der Nähe einer Auslasstür (11) des Tunnelofens (2) angeordnet ist.

6. Anlage (1) nach einem der vorhergehenden Ansprüche, bei welcher in der Zwischenzone (5) eine dritte Saugeinrichtung (18) in der Nähe eines Auslasses (19) der Pyrolysezone (3) angeordnet ist, und bei welcher eine vierte Saugeinrichtung (21) in der Nähe eines Einlasses (22) der Gasifizierungszone angeordnet ist, wobei die dritte Saugeinrichtung (18) und die vierte Saugeinrichtung (21) eine Nachbrennereinrichtung (20) versorgen.

7. Anlage (1) nach einem der vorhergehenden Ansprüche, bei welcher stromabwärts der Gasifizierungszone (4) in der Förderrichtung des Behälters (6) eine Kühlzone (26) für die Kohlenstoff- oder Glasfasern vorgesehen ist, die von den Verbundmaterialien an dem Ende des Pyrolyseverfahrens und des Gasifizierungsverfahrens erhalten werden.

8. Anlage (1) nach einem der vorhergehenden Ansprüche, welche ferner eine Wasch- und Trockeneinrichtung (13) für die Kohlenstoff- oder Glasfasern aufweist.

9. Anlage nach Anspruch 8, welche ferner eine erste Fördereinrichtung (8) zum Fördern der Behälter (6) zu einer Einlasszone (7) des Tunnelofens (2) aufweist, welche eine zweite Fördereinrichtung (9) aufweist, die die Behälter (6) von der ersten Fördereinrichtung (8) erhält und die Behälter (6) innerhalb des Tunnelofens (2) durch die Pyrolysezone (3) und die Gasifizierungszonen (4) fördert, bis die Behälter (6) außerhalb des Tunnelofens (2) in eine Auslasszone (27) gelangen, und welche eine dritte Fördereinrichtung (12) aufweist, welche die Behälter (6) von der zweiten Fördereinrichtung (9) erhält und die Behälter durch die Wasch- und Trockeneinrichtung (13) fördert.

10. Verfahren zum Wiedergewinnen von Kohlenstoff- oder Glasfasern aus Verbundmaterialien, welche die Fasern in einer Polymermatrix enthalten, mit den folgenden Schritten:
- Behandeln des Verbundmaterials mit einer Pyrolysebehandlung in einer Pyrolysezone (3) eines Tunnelofens (2) in einer Atmosphäre, die frei von Sauerstoff ist;
- Behandeln des Verbundmaterials mit einer Gasifizierungsbehandlung in einer Gasifizierungszone (4) des Tunnelofens (2) bei Anwesenheit von Sauerstoff,
**dadurch gekennzeichnet, dass** es ferner das Einspritzen eines Stickstoff-Flusses in eine Zwischen-Trennzone (5) aufweist, die zwischen der Pyrolysezone (3) und der Gasifizierungszone (4) angeordnet ist, um zu verhindern, dass die Atmosphäre der Pyrolysezone und die Atmosphäre der Gasifizierungszone in Kontakt miteinander gelangen.

11. Verfahren nach Anspruch 10, welches ferner das Ansaugen des durch den Pyrolyseprozess erzeugten Dampfes in der Zwischenzone in der Nähe eines Auslasses (19) der Pyrolysezone (3) sowie das Ansaugen von Rauchgasen in der Nähe eines Auslasses (22) umfasst, die während des Gasifizierungsprozesses der Gasifizierungszone (4) erzeugt werden, sowie das Behandeln der am Ende des Pyrolyse- und Gasifizierungsprozesses erhaltenen Kohlenstoff- oder Glasfasern durch ein Waschen und Trocknen.

12. Verfahren nach Anspruch 10 oder 11, bei welchem der Pyrolyseprozess bei einer Temperatur zwischen 450 °C und 600 °C über eine Zeit zwischen 20 und 40 Minuten durchgeführt wird.

13. Verfahren nach einem der Ansprüche 10 bis 12, bei welchem der Gasifizierungsprozess bei einer Temperatur zwischen 450 °C und 600 °C über eine Zeit zwischen 10 und 20 Minuten ausgeführt wird.

14. Verfahren nach einem der Ansprüche 10 bis 13, bei welchem die Kohlenstoff- oder Glasfasern, die am Ende des Pyrolyse- und Gasifizierungsprozesses erhalten werden, bei einer Temperatur unterhalb von 350 °C gekühlt werden, bevor sie aus dem Tunnelofen (2) entfernt werden.

15. Verfahren nach irgendeinem der vorhergehenden Ansprüche, bei welchem der Gasifizierungsprozess durchgeführt wird, indem zu der Gasifizierungszone (3) eine Luftmenge geliefert wird, die zwischen 0,8 kg und 1,4 kg für jedes Kilogramm von zu behandelndem Material liegt.

## Revendications

1. Installation (1) pour récupérer des fibres de carbone ou de verre à partir de matériaux composites comprenant lesdites fibres dans une matrice de polymère, comprenant un four tunnel (2) le long duquel lesdits matériaux sont transportés à l'intérieur de contenants (6), dans laquelle ledit four tunnel comprend une zone de pyrolyse (3), dans laquelle les matériaux composites sont soumis à un procédé de pyrolyse dans une atmosphère dépourvue d'oxygène, et une zone de gazéification (3) dans laquelle lesdits matériaux sont soumis à un procédé de gazéification en présence d'oxygène, **caractérisée en ce qu'**elle comprend en outre une zone de séparation intermédiaire (5) placée entre la zone de pyrolyse (3) et la zone de gazéification (4), dans laquelle dans ladite zone intermédiaire (5) une pluralité de deuxièmes dispositifs d'injection (23) est prévue pour fournir un flux d'azote à la zone intermédiaire (5), de manière à empêcher l'atmosphère de la zone de pyrolyse (3) de venir en contact avec l'atmosphère de la zone de gazéification (4).

2. Installation (1) selon la revendication 1, comprenant une pluralité de premiers dispositifs d'injection (16) arrangés pour fournir de l'azote à ladite zone de pyrolyse (2) et/ou une pluralité de premiers dispositifs d'agitation (17) arrangés pour homogénéiser l'atmosphère dans ladite zone de pyrolyse (3).

3. Installation (1) selon l'une des revendications précédentes, dans lequel un premier dispositif d'aspiration (14) est arrangé dans ladite zone de pyrolyse (2), près d'une porte d'entrée (10) du four tunnel (2) et/ou une pluralité de troisièmes dispositifs d'injection (24) sont arrangés pour fournir de l'air à ladite zone de gazéification (4).

4. Installation (1) selon l'une des revendications précédentes, comprenant en outre une pluralité de deuxièmes dispositifs d'agitation (25) arrangés pour homogénéiser l'atmosphère dans ladite zone de gazéification (4).

5. Installation (1) selon l'une des revendications précédentes, dans laquelle un deuxième dispositif d'aspiration (16) est arrangé dans ladite zone de gazéification (3), près d'une porte de sortie (11) du four tunnel (2).

6. Installation (1) selon l'une des revendications précédentes, dans laquelle dans ladite zone intermédiaire (5) un troisième dispositif d'aspiration (18) est prévu arrangé près d'une sortie (19) de ladite zone de pyrolyse (3), et un quatrième dispositif d'aspiration (21) est prévu arrangé près d'une entrée (22) de ladite zone de gazéification, dans laquelle ledit troisième dispositif d'aspiration (18) et ledit quatrième dispositif d'aspiration (21) alimentent le dispositif de postcombustion (20).

7. Installation (1) selon l'une des revendications précédentes, dans laquelle, en aval de ladite zone de gazéification (4) dans la direction de transport des contenants (6), une zone de refroidissement (26) est prévue pour lesdites fibres de carbone ou de verre obtenues à partir desdits matériaux composites à l'issue dudit procédé de pyrolyse et dudit procédé de gazéification.

8. Installation (1) selon l'une des revendications précédentes, comprenant en outre un dispositif de lavage et de séchage (13) pour lesdites fibres de carbone ou de verre.

9. Installation (1) selon la revendication 8, comprenant en outre un premier dispositif de transport (8) pour transporter lesdits contenants (6) jusqu'à une zone d'entrée (7) du four tunnel (2), un deuxième dispositif de transport (9) qui reçoit les contenants (6) depuis le premier dispositif de transport (8) et transporte les contenants (6) à l'intérieur du four tunnel (2), à travers les zones de pyrolyse (3) et les zones de gazéification (4) jusqu'à ce que les contenants (6) soient pris hors du four tunnel (2) dans une zone de sortie (27), et un troisième dispositif de transport (12) qui reçoit lesdits contenants (6) depuis le deuxième dispositif de transport (9) et transporte les contenants à travers le dispositif de lavage et de séchage (13).

10. Procédé pour récupérer des fibres de carbone ou de verre à partir de matériaux composites comprenant lesdites fibres dans une matrice de polymère, comprenant les étapes suivantes :
- soumettre lesdits matériaux composites à un traitement de pyrolyse dans une zone de pyrolyse (3) d'un four tunnel (2) dans une atmosphère dépourvue d'oxygène ;
- soumettre lesdits matériaux composites à un traitement de gazéification dans une zone de gazéification (4) dudit four tunnel (2), en présence d'oxygène,
caractérisé ce qu'il comprend en outre injecter un flux d'azote dans une zone de séparation intermédiaire (5) placée entre ladite zone de pyrolyse (3) et ladite zone de gazéification (4) pour empêcher l'atmosphère de la zone de pyrolyse et l'atmosphère de la zone de gazéification de venir en contact l'une avec l'autre.

11. Procédé selon la revendication 10, comprenant en outre aspirer dans ladite zone intermédiaire (5) la vapeur produite par le procédé de pyrolyse près d'une sortie (19) de ladite zone de pyrolyse (3) et aspirer les fumées produites par le procédé de gazéification près d'une entrée (22) de la zone de gazéification (4) et/ou soumettre les fibres de carbone ou de verre obtenues à l'issue des traitements de pyrolyse et de gazéification à un lavage et à un séchage.

12. Procédé selon la revendication 10 ou 11, dans lequel ledit procédé de pyrolyse est mené à une température comprise entre 450 °C et 600 °C pendant une durée comprise entre 20 minutes et 40 minutes.

13. Procédé selon l'une des revendications 10 à 12, dans lequel le procédé de gazéification est mené à une température comprise entre 450 °C et 600 °C pendant une durée comprise entre 10 minutes et 20 minutes.

14. Procédé selon l'une quelconque des revendications 10 à 13, dans lequel lesdites fibres de carbone ou de verre obtenues à l'issue desdits procédés de pyrolyse et de gazéification sont refroidies à une température inférieure à 350 °C avant d'être extraites dudit four tunnel (2).

15. Procédé selon l'une quelconque des revendications précédentes, dans lequel ledit procédé de gazéification est réalisé en fournissant à ladite zone de gazéification (3) une quantité d'air comprise entre 0,8 kg et 1,4 kg pour chaque kilogramme de matériau à traiter.
